Europäisches Patentamt

European Patent Office

Office européen des brevets

(11) Veröffentlichungsnummer: **0 129 021**
**B1**

(12) **EUROPÄISCHE PATENTSCHRIFT**

(45) Veröffentlichungstag der Patentschrift:
30.03.88

(21) Anmeldenummer: **84104553.7**

(22) Anmeldetag: **21.04.84**

(51) Int. Cl.⁴: **A 01 F 15/00**

(54) Umhüllungsvorrichtung für Rundballen in Ballenpressen.

(30) Priorität: **18.06.83 DE 3322024**

(43) Veröffentlichungstag der Anmeldung:
**27.12.84 Patentblatt 84/52**

(45) Bekanntmachung des Hinweises auf die Patenterteilung:
**30.03.88 Patentblatt 88/13**

(84) Benannte Vertragsstaaten:
**AT BE CH DE FR GB IT LI NL SE**

(56) Entgegenhaltungen:
**US - A - 4 366 665**
**US - A - 4 407 113**
**US - A - 4 409 784**

(73) Patentinhaber: **Maschinenfabriken Bernard Krone GmbH, Heinrich-Krone-Strasse 10, D-4441 Spelle (DE)**

(72) Erfinder: **Krone, Bernard, Bahnhofsstrasse 11, D-4441 Spelle (DE)**
Erfinder: **Ahler, Wilhelm, Alter Dyk 40, D-4424 Stadtlohn (DE)**

(74) Vertreter: **Busse & Busse Patentanwälte, Postfach 1226, D-4500 Osnabrück (DE)**

## Beschreibung

Die Erfindung bezieht sich auf eine an eine Ballenpresse anbaubare Vorrichtung zum Umhüllen eines in der Formkammer der Ballenpresse enthaltenen Rundballens aus landwirtschaftlichem Erntegut mit einem Abschnitt einer Hüllbahn, gemäss dem Oberbegriff des Anspruchs 1.

Bei einer bekannten Vorrichtung dieser Art (DE-PS 2 930 590) ist ein ein- und abschaltbarer Antrieb für eine der beiden Abzugsrollen der Abzugsvorrichtung vorgesehen, der von einem Motor, von einem die Ballenpresse ziehenden Zugfahrzeug oder von einer anderen Antriebsvorrichtung her abgeleitet ist und einen Kettentrieb umfasst. Bei in der Praxis ausgeführten Umhüllungsvorrichtungen dieser Art ist anstelle des Kettentriebs ein Riementrieb vorgesehen, dessen Treibriemen durch eine von einem ersten Schwenkbedienungshebel getragenen Druckrolle in Antriebsübertragungseingriff mit den Riemenscheiben des Riementriebs überführt und durch Auslösen des Druckeingriffs der Druckrolle auf den Keilriemen ausser Antriebsfunktion gesetzt werden kann. Das Schneidorgan besteht aus einem langgestreckten, mit einer etwa mittigen Spitze der Hüllbahn zugewandten einteiligen Messer, das an einem verschieblich geführten Träger angebracht ist. Auf den Träger wirken dabei entgegen beiden Verschieberichtungen des Trägers wirksame Druckfedern ein, die dem Träger und mit diesem dem Schneidorgan eine Ruhelage vorgeben, in der sich das Schneidorgan im Abstand oberhalb der Hüllbahnebene befindet, welche die Hüllbahn während eines Umhüllungsvorgangs im Schneidbereich einnimmt. Mittels eines zweiten Schwenkbedienungshebels ist das Schneidorgan entgegen der Wirkung der ersten Gruppe von Federn in eine Schneidendstellung absenkbar, in der das Schneidmesser die Ebene der Hüllbahn durchgreift.

Zur Durchführung eines Umhüllungsvorganges nach Beendigung der Ballenformung wird von einer Bedienungsperson der erste Schwenkbedienungshebel betätigt, um den Antrieb für die Abzugsrollen der Abzugsvorrichtung einzuschalten und ein Stück Hüllbahn von der Vorratsrolle abzuziehen und der Guteintrittsöffnung der Formkammer zuzuführen. Sobald das Vorlaufende der Hüllbahn vom Ballen bzw. dem Erntegut erfasst und unter weiterem Abzug mitgenommen wird, kann durch Rückführen des ersten Schwenkbedienungshebels in seine Ausgangslage der Antrieb auf die Abzugswalzen abgeschaltet werden. Durch Eigenmitnahme der Hüllbahn durch den Rundballen, der während des Umhüllvorganges üblicherweise eine Rotationsbewegung um seine Längsmittelachse mit Hilfe von im Formraum wirksamen Förderorganen ausführt, erfolgt nun ein Umhüllen des Rundballens durch fortschreitendes Einwickeln in die Hüllbahn, bis ein gewünschter Umhüllungsgrad erreicht ist. Dieser beträgt im allgemeinen zumindest etwa 390° Umschlingungswinkel, kann jedoch auch z.B. 720° oder auch 900° Umschlingungswinkel betragen. In den letzteren Fällen sichert der Umhüllungsgrad ohne Verklebung der einander überdeckenden Wicklungsbereiche der Hüllbahn einen festen Verbleib der Hüllbahn auf dem Aussenumfang des Rundballens, wenn dieser aus der Formkammer ausgeworfen und auf dem Feld abgelegt wird.

Stellt die Bedienungsperson durch Beobachten fest, dass ein gewünschter Umhüllungsgrad erreicht ist, so kann der Umhüllungsvorgang durch Betätigen des zweiten Schwenkbedienungshebels und das damit einhergehende Durchschneiden der Hüllbahn der Umhüllungsvorgang beendet werden.

Aus der US-A-4 366 665 ist eine ähnliche Vorrichtung bekannt, wobei das Schneidorgan in der Startphase des Umhüllungsvorganges aus seiner die Ruhelage bildenden Schneidendstellung gegen die Wirkung einer Feder auf den Träger des Scheidorgans in eine vorgespannte Schneidausgangslage mittels eines Solenoides bewegt wird und dann, am Ende des Umhüllungsvorganges, für seine durch die Feder bewirkte Schneidbewegung freigegeben wird. Dafür muss ein Schalter zweimal betätigt werden oder einmal mit anschliessender Ausschaltung durch eine Zeitvorrichtung.

Der Erfindung liegt die Aufgabe zugrunde, eine Vorrichtung der im Oberbegriff des Anspruchs 1 angegebenen Art zu schaffen, die durch Betätigung eines einzigen Schwenkbedienungshebels in Betrieb setzbar ist und den Umhüllungsvorgang bei Erreichen eines vorgegebenen Umhüllungsgrades selbsttätig beendet.

Diese Aufgabe löst die Erfindung mit den Merkmalen des kennzeichnenden Teils des Anspruchs 1. Hinsichtlich wesentlicher weiterer Ausgestaltungen wird auf die Ansprüche 2 bis 15 verwiesen.

Die Vorrichtung nach der Erfindung ermöglicht eine einfache Einhebel-Bedienung, wobei durch Betätigung des Schwenkbedienungshebels der Umhüllungsvorgang lediglich noch gestartet werden muss. Während des Umhüllungsvorganges erfolgt ein Messvorgang, durch den das Erreichen eines vorgegebenen Umhüllungsgrades für den Rundballen ermittelbar ist und an dessen Ende ein selbsttätiges Abschneiden des den Rundballen umhüllenden Bahnabschnitts von der Hüllbahn auf der Vorratsrolle erfolgt. Mit dem selbsttätigen Abschluss des Umhüllvorganges gelangt dabei die Vorrichtung zugleich wieder in eine Ausgangsstellung für ein Umhüllen eines nachfolgenden Rundballens durch erneutes Betätigen des einzigen Schwenkbedienungshebels. Zugleich mit der Vereinfachung der Bedienung geht auch eine erhöhte Genauigkeit der Umhüllung einher, da sämtliche Ballen unabhängig von einem Beobachten durch eine Bedienungsperson mit gleichem Umhüllungsgrad in die Hüllbahn eingewickelt werden. Die Ausgestaltung der Vorrichtung nach der Erfindung ermöglicht eine besonders einfache Nachrüstung von Ballenpressen mit einer solchen Vorrichtung ohne nennenswerte Veränderungsarbeiten an der Ballenpresse und mit geringstem Montageaufwand. Dabei können Ballenpressen bereits herstellerseitig ohne nennenswerten Mehraufwand für eine solche spätere Nachrüstung vorbereitet werden. Die besondere Ausbildung des Schneidorgans sichert ein schnelles und besonders sauberes Abschneiden bei Hüllmaterialien aller Art, auch bei netz- oder gitterförmigen Bahnmaterialien, da im gesamten Bereich der Schneidlinie das Durchtrennen der Hüllbahn durch einen echten Schneidvorgang vorgenommen wird, der zudem so kurzfristig abläuft, dass Ausfaserungen durch Reisserscheinungen infolge eines nicht gleichmässigen gleichzeitigen Gesamtschnittes vermieden sind.

Ein Ausführungsbeispiel des Gegenstands der Erfindung ist in der Zeichnung näher veranschaulicht und wird nachfolgend beschrieben. In der Zeichnung zeigen:

Fig. 1 eine schematische, teilweise abgebrochene Seitenansicht einer Ballenpresse mit einer Umhüllungsvorrichtung nach der Erfindung,

Fig. 2 eine Seitenansicht ähnlich Fig. 1 zur Veranschaulichung der Umhüllungsvorrichtung in der Ausgangslage ihrer Teile vor einem Umhüllungsvorgang in einer Detailvergrösserung,

Fig. 3 eine Seitenansicht ähnlich Fig. 1 zur Veranschaulichung der Teile der Umhüllungsvorrichtung während des Antriebs der Abzugsvorrichtung in der Startphase des Umhüllungsvorganges in Vergrösserung und unter Fortlassung von für das Verständnis nicht bedeutsamen Baudetails,

Fig. 4 eine Seitenansicht ähnlich Fig. 3 zur Veranschaulichung der Teile der Umhüllungsvorrichtung während des Umhüllungsvorganges nach Abschalten des Antriebs für die Abzugsvorrichtung,

Fig. 5 einen abgebrochenen, schematischen Querschnitt nach der Linie V–V in Fig. 4, und

Fig. 6 eine perspektivische, abgebrochene Vorderansicht des Schneidorgans und seines Trägers.

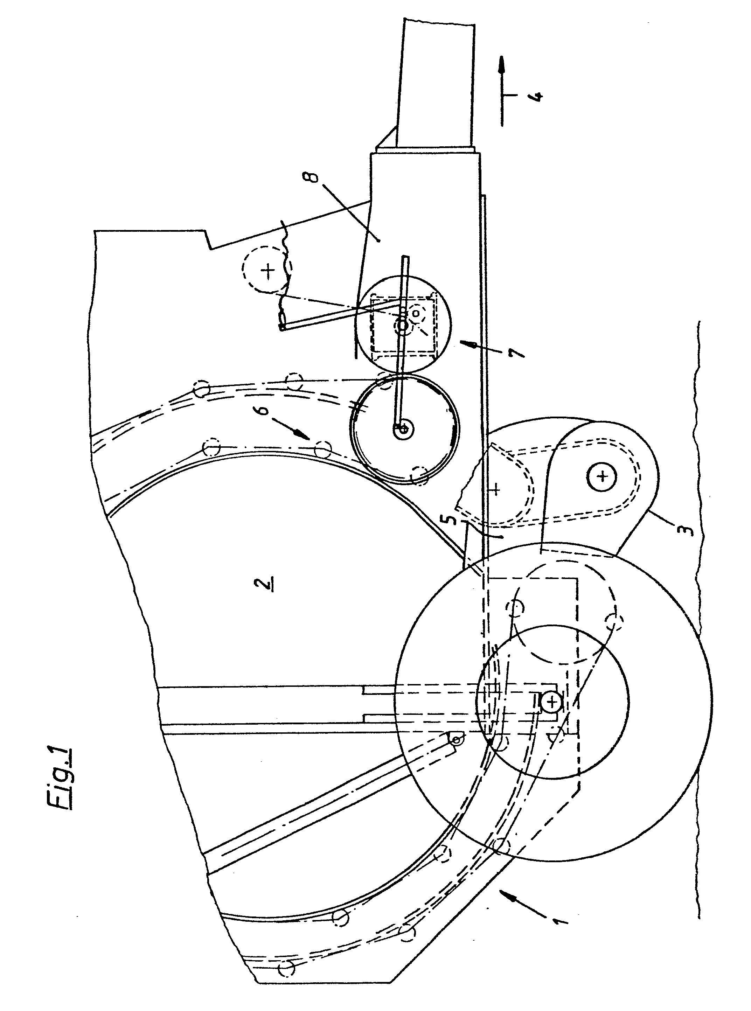

Fig. 1 veranschaulicht eine Ballenpresse 1 mit einer Formkammer 2, einer Gutaufnahmevorrichtung 3 in Fahrtrichtung 4 vor und unterhalb einer Guteintrittsöffnung 5 zur Formkammer 2, und Förderorganen 6, die den Transport des in die Formkammer 2 hineingeförderten Ernteguts bis hin zum Abschluss des Formvorganges für den zu bildenden Rundballen übernehmen.

Ballenpressen dieser Art sind für sich bekannt. Ihre spezielle Ausgestaltung ist für die Umhüllungsvorrichtung nach der Erfindung nicht von Bedeutung, die auch mit Ballenpressen einer anderen als der dargestellten Konstruktion verbunden werden kann.

Die Umhüllungsvorrichtung ist in ihrer Gesamtheit mit 7 bezeichnet und hat in Anbaustellung an der Ballenpresse 1 eine Lage vor und verhältnismässig dicht oberhalb der Guteintrittsöffnung 5. Sie bildet insgesamt eine Baueinheit, die nachträglich in den vorderen Bereich des Pressengehäuses 8 eingesetzt werden kann.

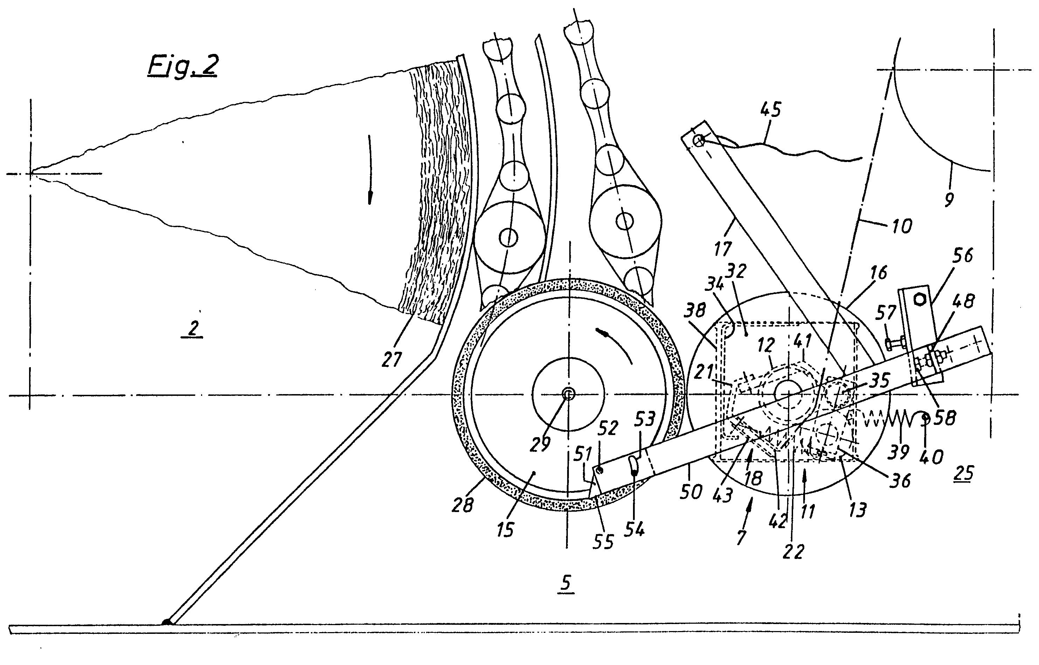

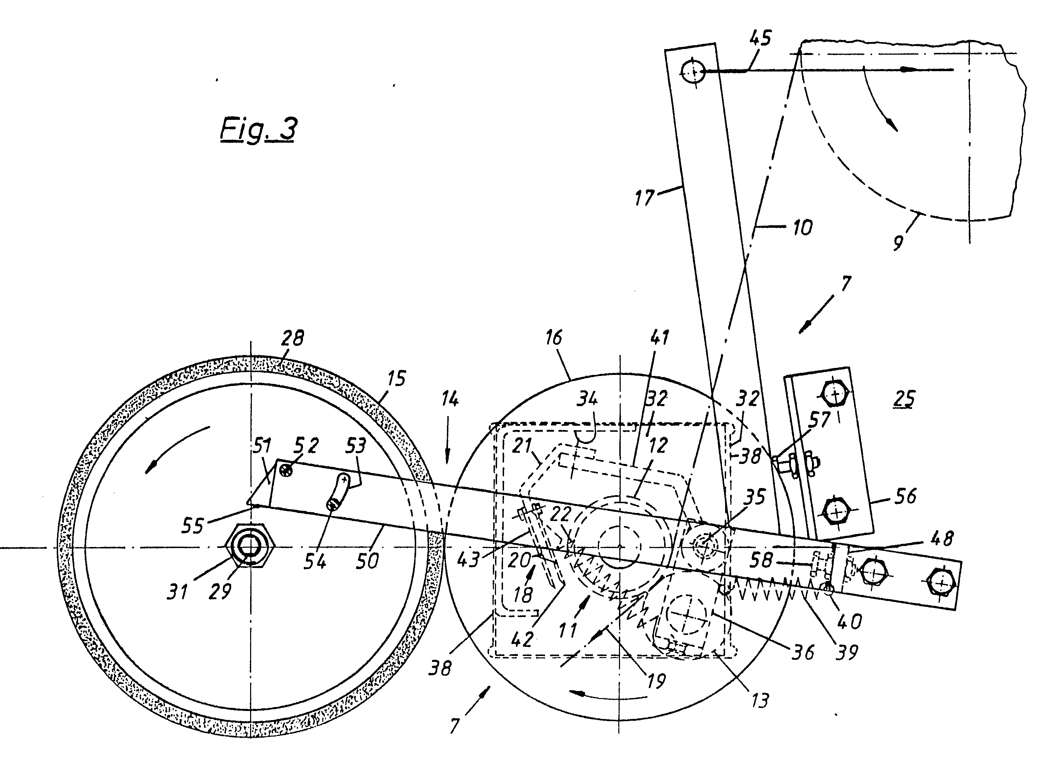

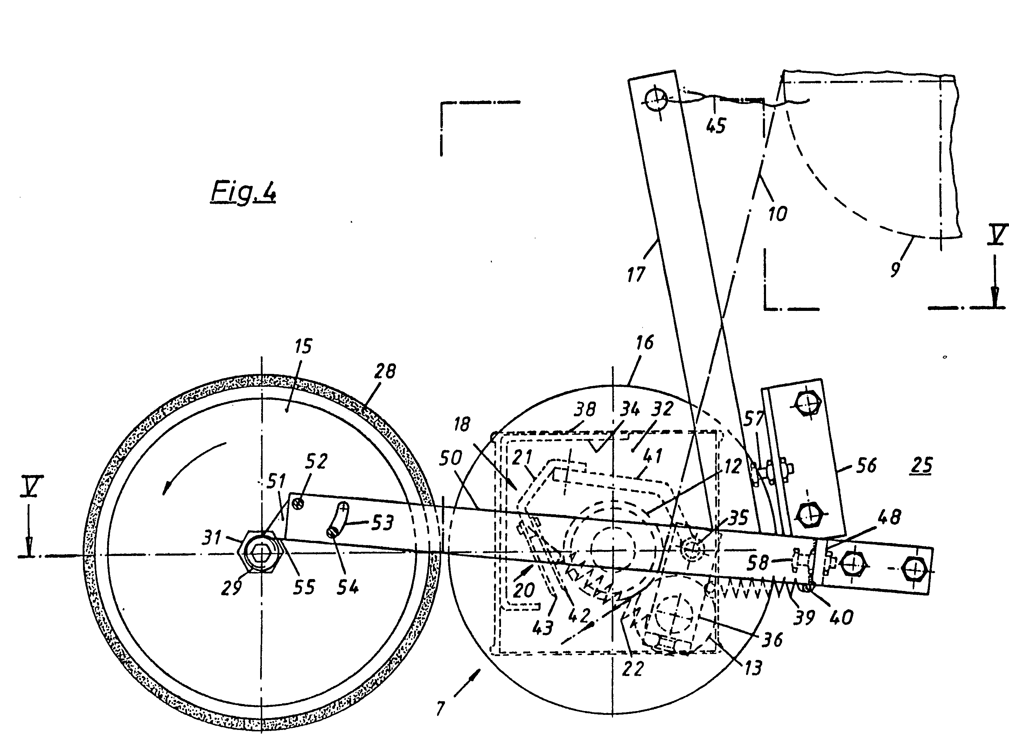

Wie sich aus den vergrösserten Detaildarstellungen gemäss den Fig. 2 bis 4 näher ersehen lässt, umfasst die Umhüllungsvorrichtung 7 eine Vorratsrolle 9 einer endlosen Hüllbahn 10 und eine Abzugsvorrichtung 11 in Gestalt von zwei in ständigem gegenseitigen Druckeingriff stehenden Abzugsrollen 12, 13, welche bei einem Antrieb die Hüllbahn zwischen sich gemeinsam zur Guteintrittsöffnung hin fördern. Ferner umfasst die Umhüllungsvorrichtung eine Antriebsvorrichtung 14 für die Abzugsvorrichtung 11, und zwar in Gestalt eines Reibradgetriebes mit zwei Reibrädern 15, 16, die mittels eines Schwenkbedienungshebels 17 in und ausser gegenseitigen Reibschluss beweglich sind. Schliesslich umfasst die Umhüllungsvorrichtung eine gegen Ende des Umhüllungsvorgangs betätigbare Schneidvorrichtung 18, die ein quer zur Ablaufrichtung 19 der Hüllbahn 10 aus ihrer in Fig. 4 veranschaulichten Schneidausgangslage gegen die Hüllbahn 10 einrück- und ein Stück über deren Bahneben hinaus in eine Schneidendstellung bewegbares Schneidorgan 20 besitzt, das im Bereich zwischen der Guteintrittsöffnung 5 und der Abzugsvorrichtung 11 angeordnet und an einem Träger 21 befestigt ist, an dem Federn 22 angreifen.

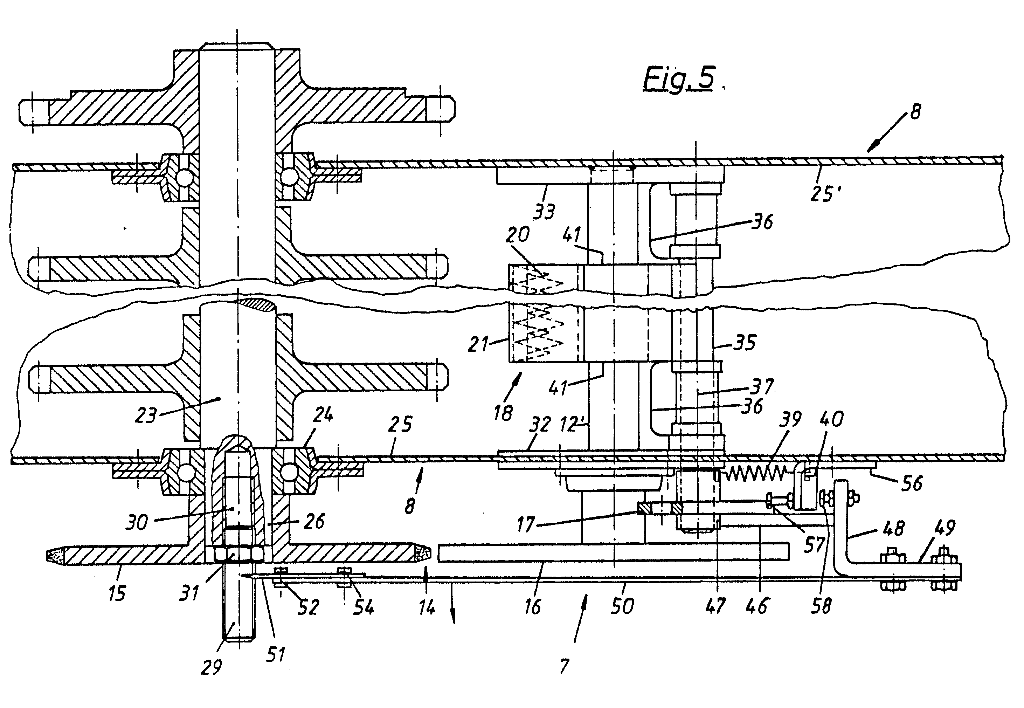

Wie insbesondere den Fig. 3 und 4 mit der stärksten Vergrösserung der Teile sowie der Fig. 5 entnommen werden kann, ist das erste Reibrad 15 des Reibradgetriebes 14 auf einem Ende einer Antriebswelle 23 für die Förderorgane 6 der Formkammer 2 der Ballenpresse 1 befestigt. Das zugehörige Ende der Antriebswelle 23 ist dabei in einem Lager 24 in einer ersten Wand 25 des Pressengehäuses 8 gelagert und trägt das Reibrad 15 auf einem über das Lager 24 nach aussen vorstehenden Teil 26.

Das Reibrad 15 läuft dementsprechend mit der Antriebswelle 23 ständig um, wenn diese während des Ballenformungsvorganges und während des Umhüllungsvorganges z.B. vom Zugfahrzeug für die Ballenpresse 1 her angetrieben wird. Bei fertiggeformtem Rundballen 27, wie er schematisch in Fig. 2 veranschaulicht ist, entspricht eine volle Umdrehung der Antriebswelle 23 und damit des Reibrades 15 einem Drehwinkel für den Rundballen 27 bzw. einem Umfangswinkel, der je nach konstruktiver Auslegung der Ballenpresse z.B. einem Achtel des Gesamtumfangswinkels von 360° entspricht. Dies bedeutet, dass bei dem gewählten Beispiel bei 8 Umdrehungen des Reibrades 15 der Rundballen 27 in der Formkammer 2 eine volle Umdrehung ausgeführt hat.

Das zweite Reibrad 16 des Reibradgetriebes 14 ist auf dem gleichseitigen Wellenende der Welle 12′ der Abzugsrolle 12 der Abzugsvorrichtung 11 fest angebracht und aus seiner Betriebsausgangslage gemäss Fig. 2 ausser Reibschluss mit dem Reibrad 15 in Reibschluss am Reibrand 15 andrückbar. Das erste Reibrad 15 hat an seinem Umfang einen den Reibungsfaktor erhöhenden Belag 28, z.B. aus Gummi, Kunststoff od.dgl., und das Reibrad 16 besitzt an seinem Umfang z.B. eine nicht näher veranschaulichte Riffelung.

Dem ersten Reibrad 15 ist ein einseitig vorstehendes, abtastbares Messorgan 29 kaoxial zugeordnet, das in einer besonders einfachen Ausgestaltung als Gewindebolzen ausgebildet ist, dessen Gewindegänge eine Messstrecke bilden. Der Gewindebolzen 29 ist in eine im Ende 26 der Antriebswelle 23 koaxial angeordnete Sackgewindebohrung 30 einschraubbar sowie mittels einer Kontermutter 31 in seiner jeweiligen Einschraublage festlegbar. Die Einschraublage wird in Ansehung eines gewünschten Umhüllungsgrades des Rundballens 27 durch die Hüllbahn 10 festgelegt, und zwar derart, dass z. B. bei einem Umhüllungsgrad von 720° Umschlingungswinkel das vorstehende Ende des Gewindebolzens 29 16 volle, frei abtastbare Gewindegänge im Bereich zwischen der Kontermutter 31 und dem Aussenende des Gewindebolzens 29 darbietet. Entsprechend dem obigen Beispiel entsprechen 16 volle Umdrehungen der Antriebswelle 23 und damit des Gewindebolzens 29 zwei vollen Umdrehungen des Rundballens 27. Durch mehr oder weniger weites Einschrauben des Gewindebolzens 29 in die Sackgewindebohrung 30 kann die von der Zahl der freien, abtastbaren Gewindegänge gebildete Messstrecke vergrössert bzw. verkleinert werden.

Die Wellenenden der Welle 12' der Abzugsrolle 12 sind in Lagern von endseitigen Lagerplatten 32, 33 gelagert, und die Lagerplatten 32, 33 sind untereinander über achsparallele Verbindungsmittel zu einer Baueinheit verbunden. Als Verbindungsmittel kann ein Blechwinkelprofil 34 Verwendung finden, das z. B. mit einander zugewandten Innenseiten der Lagerplatten 32, 33 verschweisst (in Fig. 5 aus Gründen der Deutlichkeit nicht gezeigt) ist.

Der Schwenkbedienungshebel 17 greift an einer ebenfalls in den beiden Lagerplatten 32, 33 achsparallel zu den Abzugsrollen 12, 13 gelagerten Schwenkwelle 35 an, die zugleich als Lagerachse für auf ihr frei schwenkbar gelagerte Schwenkbügel 36 dient. Diese Schwenkbügel 36 stützten über Wellenlager die zweite Abzugsrolle 13 ab, die dementsprechend in einer Schwenkbewegung um die Mittelachse 37 der Schwenkwelle 35 an die Abzugsrolle 12 in Druckeingriff heranbewegbar ist. Der Herbeiführung eines ständigen Druckeingriffs dienen die Zugfedern 22, deren dem Träger 21 für das Schneidorgan 20 abgewandten Enden an den Schwenkbügeln 36 angreifen. Die Abzugsrolle 13 ist in ihren Wellenlagern an den Schwenkbügeln 36 frei drehbar gelagert und erhält ihre Drehbewegung von der Abzugsrolle 12 infolge des Druckeingriffs über die zwischen beiden Abzugsrollen 12, 13 angeordnete Hüllbahn 10.

Die Baueinheit aus den Lagerplatten 32, 33, deren Verbindungsmittel 34 und den von den Lagerplatten 32, 33 getragenen Teilen ist in der Art eines Einschubs durch eine Einsetzöffnung 38 in der Wand 25 des Pressengehäuses 8 in dieses einsetzbar. Dabei ist die dem Reibradgetriebe 14 abgewandte Lagerplatte 33 der Baueinheit mit einer ihr zugeordneten zweiten Wand 25' des Pressengehäuses 8 der Ballenpresse 1 fest verbindbar, während die dem Reibradgetriebe 14 zugewandte Lagerplatte 32 in der Einsetzöffnung 38 begrenzt horizontal verschiebbar abgestützt ist. Hierzu ist die Einsetzöffnung 38 zumindest in horizontaler Richtung etwas breiter als die Lagerplatte 32 in dieser Richtung, um es so zu ermöglichen, dass die Lagerplatte 32 aus der Ausgangsstellung gemäss Fig. 2 in die Stellung gemäss Fig. 3 verschieblich ist, in der die beiden Reibräder 15, 16 in Reibschluss gedrückt sind. Eine Feder 39 greift auf der dem Reibrad 15 abgewandten Seite an der Lagerplatte 32 an und dient dazu, die Lagerplatte 32 in ihrer Ausgangslage gemäss Fig. 2 zu halten bzw. nach einer Verschiebebewegung in Richtung auf das Reibrad 15 hin wieder in die Ausgangslage gemäss Fig. 2 zurückzubewegen. Hierzu greift die Feder 39 mit ihrem anderen Ende an einem Stift 40 an der Wand 25 des Pressengehäuses an.

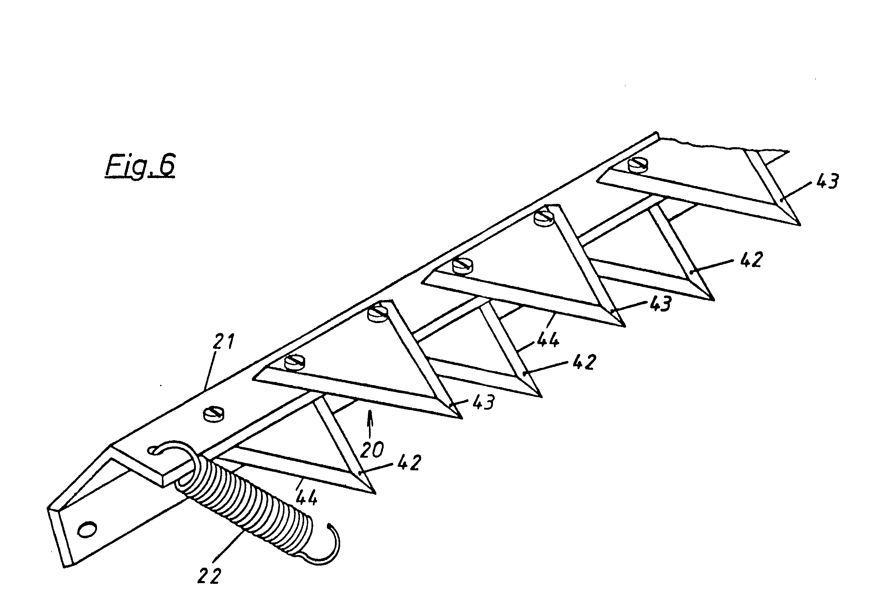

Der Träger 21 für das Schneidorgan 20 ist von einer sich annähernd über die Breite der Hüllbahn 10 und parallel zu den Abzugsrollen 12, 13 erstreckenden Trägerleiste 21 gebildet, an der auf der Schwenkwelle 35 des Schwenkbedienungshebels 17 befestigte, abgekröpfte Hebelarme 41 angreifen, welche die Antriebswellen der Abzugsrollen 12, 13 übergreifen. Zusammen mit der abgekröpften Form der Trägerleiste 21 erhält das Schneidorgan 20 seine Ausrichtung, wie sie insbesondere den Fig. 2 bis 4 entnehmbar ist. Wie insbesondere der Fig. 6 entnommen werden kann, besteht das Schneidorgan aus einer Vielzahl von in zwei Reihen angeordneten, nebeneinander an der Trägerleiste 21 befestigten, etwa dreieckförmigen Messerklingen, von denen die in der ersten Reihe angeordneten Messerklingen mit 42 und die in der zweiten Reihe mit 43 bezeichnet sind. Die Messerklingen 42 der ersten Reihe sind im Abstand flächenparallel und auf Lücke versetzt zu den Messerklingen 43 der zweiten Reihe angeordnet, und zwar derart, dass die Messerklingen 42, 43 mit einer Dreieckspitze zur Hüllbahn 10 hinweisen und – in Vorderansicht gesehen – die zugeschärften Schneidkanten 44 der Klingen 43 der zweiten Reihe sich mit den Schneidkanten 44 der Klingen 42 der ersten Reihe jeweils in Punkten verschneiden, die etwa Schneidkantenhalbierungspunkte bilden.

Der Abstand zwischen den Messerklingen 42 der ersten Reihe und den Messerklingen 43 der zweiten Reihe bestimmt sich bei dem dargestellten Ausführungsbeispiel durch die Dicke der Trägerleiste 21, an deren Rück- bzw. Vorderseite die erste und die zweite Reihe der Messerklingen 42, 43 angeschraubt ist. Diese besondere Ausgestaltung des Schneidorgans ermöglicht einen sauberen, die gesamte Breite einer Hüllbahn 10 gleichzeitig erfassenden Trennschnitt auch dann, wenn die Hüllbahn z. B. eine netz- oder gitterförmige Struktur besitzt.

Der Schwenkbedienungshebel 17, an dessen oberen Ende eine Zugleine 45 angreifen kann, ist an seinem unteren Ende mit einem Hebelarm 46 fest verbunden, der seinerseits mit einer Verbindungsbüchse 47 auf dem Ende der Schwenkwelle 35 verbunden ist. An dem der Büchse 47 abgewandten Ende ist der Hebelarm 46 mit einem Winkelarm 48 verbunden, der an der Aussenseite seines über die Ebene des Reibradgetriebes 14 vorgezogenen Schenkels 49 einen Tastarm 50 trägt. Dieser Tastarm 50 erstreckt sich vor bis in den Mittelbereich des Reibrades 15 und ist als lediglich in Querrichtung biegsame Federlamelle ausgebildet. An seinem freien Ende trägt der Tastarm 50 eine Schwenkarretierungsklinke 51, die mittels eines Gelenkbolzens 52 begrenzt schwenkbar am Tastarm 50 befestigt ist. Der Tastarm 50 besitzt einen bogenförmigen Begrenzungsschlitz 53, in den ein Anschlagstift 54 an der Klinke 51 angreift. Die Anordnung ist so gewählt, dass bei einer Aufwärtsbewegung des Tastarms 50 die Schwenkarretierungsklinke 51 bei Auftreffen auf das Messorgan 29 durch dieses aus ihrer Arretierungsstellung, die sie in Fig. 2, 3 und 4 einnimmt, im Gegenuhrzeigersinn ausschwenken kann und nach Passieren des Messorgans 29 in ihre Arretierungsstellung zurückfällt. Legt sich in der Arretierungsstellung der Schwenkarretierungsklinke diese auf das Messorgan 29 auf, so greift sie mit einer unteren Tastkante 55 in das Gewinde, d.h. die Messstrecke, des Messorgans 29 ein, während sie gleichzeitig den Tastarm 50 daran hindert, aus seiner Stellung in Fig. 4 in die Ausgangsstellung gemäss Fig. 2 zurückzukehren.

Im Schwenkbereich des Schwenkbedienungshebels 17 ist an der Wand 25 des Pressengehäuses 8 ein Winkelstück 56 befestigt, der einen einstellbaren Anschlag 57 für den Schwenkbedienungshebel 17 trägt. Dieser Anschlag 57 bildet ein Schubwiderlager, an dem sich der Schwenkbedienungshebel 17 kurz vor Erreichen seiner Betätigungsendstellung anlegt mit der Folge, dass eine fortgesetzte Schwenkbewegung des Schwenkbedienungshebels 17 (in z.B. Fig. 4 im Uhrzeigersinn) dazu führt, dass das gesamte hebelseitige Ende der Baueinheit und damit das Reibrad 16 in Richtung auf das Reibrad 15 verschoben wird und die beiden Reibräder 15, 16 in antriebsübertragenden Reibschluss gelangen. Am Hebelteil 48 ist schliesslich noch ein einstellbarer Anschlag 58 vorgesehen, der in Eingriff mit dem Winkelstück 56 die Ausgangslage des Schwenkbedienungshebels 17 (Fig. 2) begrenzt und zugleich die Baueinheit an einer Verschiebung in Richtung auf das Reibrad 15 hindert.

Die vorbeschriebene Umhüllungsvorrichtung arbeitet wie folgt: Ist in der Formkammer 2 ein Rundballen 27 fertiggestellt, so wird ausgehend von der in Fig. 2 veranschaulichten Ausgangsstellung aller Teile der Umhüllungsvorrichtung 7 der Schwenkbedienungshebel 17 in Fig. 2 im Uhrzeigersinn betätigt, z.B. durch Ziehen an der Zugleine 45. Dadurch wird die Vorrichtung in den Zustand gemäss Fig. 3 überführt. In der Stellung der Teile gemäss Fig. 3 hat der Schwenkbedienungshebel 17 seine Betätigungsendstellung erreicht, die durch das Anlegen des Reibrades 16 am Reibrad 15 definiert ist. Dieses Anlegen kommt durch eine Verschiebebewegung der Lagerplatte 32 in Richtung auf das Reibrad 15 hin in der Einsetzöffnung 38 zustande, welche durch die Schubwirkung des am Schubwiderlager 57 anliegenden Schwenkbedienungshebels 17 hervorgerufen wird. Bei der Überführung des Schwenkbedienungshebels 17 aus seiner Ausgangslage in Fig. 2 in seine Betätigungsendstellung gemäss Fig. 3 hat durch Verschwenken der Schwenkwelle 35 das Schneidorgan 20 der Schneidvorrichtung 18 eine Schwenkverlagerung aus seiner Ruhestellung gemäss Fig. 2 in eine Endstellung erfahren, die etwa der späteren Schneidausgangslage entspricht. Durch diese Verlagerung des Schneidorgans 20 bzw. dessen Trägers 21 werden die Zugfedern 22, die schon in der Ruhelage des Schneidorgans 20 gemäss Fig. 2 gespannt waren, noch weiter gespannt, wodurch gleichzeitig der Druckeingriff zwischen den Abzugsrollen 12, 13 erhöht wird. Ferner hat bei dem Übergang der Teile aus der Stellung gemäss Fig. 2 in die gemäss Fig. 3 der Tastarm 50 eine Lage eingenommen, in der die Schwenkarretierungsklinke 51 den Gewindebolzen 29 passiert hat und in ihre Arretierungsstellung zurückgefahren ist.

In der Stellung der Teile gemäss Fig. 3 erhält die Abzugsvorrichtung 11 ihren Antrieb vom Reibradgetriebe 14, der solange aufrechterhalten wird, bis das von den Abzugsrollen 12, 13 geförderte Vorlaufende der Hüllbahn 10 in die Guteintrittsöffnung 5 und weiter in die Formkammer gelangt ist und dort nun vom Rundballen 27 selbst mitgenommen wird. Sobald dies der Fall ist, beendet die Bedienungsperson ihr Ziehen an der Zugleine 45, wodurch die Teile durch die Zugwirkung der Zugfedern 22 und auch der Zugfedern 39 ihre in Fig. 4 veranschaulichte Stellung einnehmen. In dieser Stellung der Teile liegt die Schwenkarretierungsklinke 51 mit ihrer Tastunterkante 55 auf dem Gewindebolzen 29 auf mit der Folge, dass der Tastarm 50 und durch diesen der Schwenkbedienungshebel 17, die Schwenkwelle 35 und das Schneidorgan 20 in einer Stellung arretiert werden, die der Schneidausgangslage für das Schneidorgan 20 entspricht. Gleichzeitig ist der Antriebseingriff zwischen den Reibrädern 15, 16 unterbrochen, während sich zusammen mit der Antriebswelle 23 für die Förderorgane 6 das Reibrad 15 sowie der Gewindebolzen 29 weiterdrehen. Bei diesem weiteren Umlaufen des Gewindebolzens 29 in einem vorgegebenen Verhältnis zu einem Umlaufen des Rundballens 27 in seiner Formkammer 2 tastet die Schwenkarretierungsklinke 51 die Gewindegänge des Gewindebolzens 29 ab, wodurch sich (Fig. 5) der Tastarm 50 fortschreitend ausbiegt, bis am Ende des Gewindebolzens 29 die Schwenkarretierungsklinke 51 aus dem letzten Gewindegang freikommt und ein Abfallen des Tastarms 50 zurück in die Ausgangsstellung gemäss Fig. 2 erlaubt. Mit diesem Abfallen wird die Arretierung des Schneidorgans 20 in seiner Scheidausgangslage gemäss Fig. 4 ausgelöst, und das Schneidorgan 20 bewegt sich unter der Wirkung der Zugfedern 22 in einer schlagartigen Schneidbewegung, die durch das Eigengewicht der Teile verstärkt wird, in die Schneidendstellung gemäss Fig. 2, wobei sie auf dem Wege dahin die Hüllbahn durchtrennt. Damit ist der Umhüllungsvorgang abgeschlossen und die Umhüllungsvorrichtung befindet sich wieder in ihrer Ausgangslage gemäss Fig. 2, in der sie für die Ausführung eines erneuten Umhüllungsvorganges bereit ist. Nachdem das abgeschnittene Nachlaufende der Hüllbahn infolge der noch fortgesetzten Drehbewegung des Rundballens 27 in der Formkammer 2 an den Umfang des Rundballens 27 angelegt ist, kann nun der Förderantrieb für den Rundballen 27 unterbrochen und durch Öffnen der Formkammer 2 der umhüllte Rundballen 27 ausgestossen und auf den Boden abgelegt werden.

Die vorbeschriebene Umhüllungsvorrichtung ist baulich ausserordentlich einfach und dem rauhen landwirtschaftlichem Betrieb besonders gut gewachsen. Dies gilt besonders auch für die Teile 29, 51 etc., welche die Mess- und Auslösevorrichtung einerseits sowie die Verriegelungsvorrichtung für die Arretierung des Schneidorgans 20 in seiner Schneidausgangslage bilden.

Grundsätzlich jedoch ist es auch möglich, eine andere geeignete Mess- und Auslösevorrichtung zu verwenden, z.B. eine solche, die nicht den Umhüllungsgrad in Abhängigkeit vom Weg der Förderorgane 6 ermittelt, sondern z.B. die Länge eines abgezogenen Hüllenbahnteiles direkt misst und dann bei Erreichen einer vorgegebenen Messlänge die Arretierung des Schneidorgans 20 auslöst. Auch ist es denkbar, anstelle der von den Teilen 50, 51 gebildeten Verriegelungsvorrichtung eine andere vorzusehen, die z.B. auf den Träger 21 oder dessen Schwenkarme 41 einwirkt und einen Riegelkörper umfasst, der dann von der Mess- und Auslösevorrichtung betätigt wird.

Im übrigen ist es auch denkbar, den Schwenkbedienungshebel 17 statt durch Zug an seiner Zugleine 45 durch z.B. ein Gestänge oder dergl. Antriebsmittel zu betätigen, das automatisch bei Fertigstellung des Rundballens 27 wirksam wird.

### Patentansprüche

1. An eine Ballenpresse (1) anbaubare Vorrichtung zum Umhüllen eines in der Formkammer (2) der Ballenpresse enthaltenen Rundballens aus landwirtschaftlichem Erntegut mit einem Abschnitt einer Hüllbahn (10), bestehend aus einer oberhalb vor und parallel zu einer Guteintrittsöffnung (5) zur Formkammer drehbar abstützbaren Vorratsrolle (9) für eine endlose Hüllbahn (10), einer Abzugsvorrichtung (11) für die Hüllbahn, die zwei in ständigem gegenseitigen Druckeingriff stehende, die Hüllbahn bei einem Antrieb in einer Startphase des Umhüllungsvorgangs zwischen sich gemeinsam zur Guteintrittsöffnung (5) hin fördernde Abzugsrollen (12, 13) aufweist, einer mittels eines Schwenkhebels (17) ein- und abschaltbaren Antriebsvorrichtung (14) für die Abzugsvorrichtung, und einer gegen Ende des Umhüllungsvorgangs betätigbaren Schneidvorrichtung (18), die ein quer zur Ablaufrichtung der Hüllbahn aus einer Schneidausgangslage gegen die Hüllbahn einrück- und über deren Bahnebene hinaus in eine Schneidendstellung bewegbares, im Bereich zwischen der Guteintrittsöffnung (5) und der Abzugsvorrichtung (11) angeordnetes Schneidorgan (20) aufweist, das an einem mittels eines Schwenkbedienungshebels bewegbaren, unter Einwirkung von Federn (22) stehenden Träger (21) befestigt ist, dadurch gekennzeichnet, dass das Schneidorgan (20) durch Betätigen des Schwenkbedienungshebels (17) für den Antrieb (14) der Abzugsvorrichtung (11) aus seiner die Ruhelage bildenden Schneidendstellung gegen die Wirkung der Federn (22) auf den Träger (21) des Schneidorgans in eine vorgespannte Schneidausgangslage beweg- und in dieser durch eine Verriegelungsvorrichtung (50, 51) arretierbar ist, und dass eine Mess- und Auslösevorrichtung (29) vorgesehen ist, die in Abhängigkeit vom Erreichen eines vorgegebenen Umhüllungsrades für den Rundballen (27) die Arretierung aufhebt und das Schneidorgan für seine Schneidbewegung freigibt.

2. Vorrichtung nach Anspruch 1, dadurch gekennzeichnet, dass der Schwenkbedienungshebel (17) Bestandteil der Verriegelungs- (50, 51) sowie der Mess- und Auslösevorrichtung (29) ist.

3. Vorrichtung nach Anspruch 1 oder 2, dadurch gekennzeichnet, dass als Antrieb für die Abzugsvorrichtung (11) ein schaltbares Reibradgetriebe (14) mit einem Reibräderpaar (15, 16) vorgesehen ist, von denen das erste (15) auf einem Ende (26) einer Antriebswelle (23) für Förderorgane (6) der Formkammer (2) der Ballenpresse (1) befestigt und das zweite (16) auf dem gleichseitigen Wellenende (12') einer Abzugsrolle (12) angebracht ist und mittels des Schwenkbedienungshebels (17) an das erste Reibrad (15) in Reibschluss andrückbar ist.

4. Vorrichtung nach Anspruch 3, dadurch gekennzeichnet, dass dem ersten Reibrad (15) ein einseitig vorstehendes, abtastbares Messorgan (29) koaxial zugeordnet und der Schwenkbedienungshebel (17) mit einem Tastarm (50) vereinigt ist, der durch Betätigen des Schwenkbedienungshebels für den Antrieb der Abzugsvorrichtung (11) auf das Messorgan aufleg- und auf diesem abstützbar ist, während seiner Abstützung auf dem Messorgan das Schneidorgan (20) mitsamt seinem Träger (21) in der Schneidausgangslage arretiert und nach Abtasten der Messstrecke des Messorgans durch Ablösen von diesem das Schneidorgan für seine Schneidbewegung freigibt.

5. Vorrichtung nach Anspruch 4, dadurch gekennzeichnet, dass das Messorgan als Gewindebolzen (29) ausgebildet ist, dessen Gewindegänge die Messstrecke bilden, und der in eine koaxiale Sackgewindebohrung (30) in dem das erste Reibrad (15) tragenden Ende (26) der Antriebswelle (23) mehr oder weniger weit einschraubbar sowie mittels einer Kontermutter (31) in seiner jeweiligen Einschraublage festlegbar ist, und dass der Tastarm (50) als lediglich in Querrichtung biegsame Federlamelle ausgebildet ist und an seinem dem Messorgan (29) zugewandten Ende eine Schwenkarretierungsklinke (51) trägt, die bei einer Aufwärtsbewegung des Tastarms (50) durch das Messorgan aus ihrer Arretierungsstellung ausschwenkbar ist, nach Passieren des Messorgans in seine Arretierungsstellung zurückfällt und eine bei Aufliegen auf dem Messorgan in dessen Gewinde abtastend eingreifende untere Tast- und Stützkante (55) besitzt.

6. Vorrichtung nach einem oder mehreren der Ansprüche 3 bis 5, dadurch gekennzeichnet, dass die Wellenenden der mit dem zweiten Reibrad (16) versehenen Antriebsrolle (12) der Abzugsvorrichtung (11) in endseitigen Lagerplatten (32, 33) gelagert und die Lagerplatten über achsparallele Verbindungsmittel (34) untereinander zu einer Baueinheit verbunden sind, und dass die Baueinheit in der Art eines Einschubs durch eine Einsetzöffnung (38) in einer ersten Wand (25) des Pressengehäuses (8) in dieses vor der Formkammer (2) und oberhalb deren Guteintrittsöffnung (5) einsetzbar ist.

7. Vorrichtung nach Anspruch 6, dadurch gekennzeichnet, dass die dem Reibradgetriebe (14) abgewandte Lagerplatte (33) der Baueinheit mit einer ihr zugeordneten zweiten Wand (25′) des Pressengehäuses (8) der Ballenpresse (1) fest verbindbar und die dem Reibradgetriebe zugewandte Lagerplatte (32) in der Einsetzöffnung (38) der ersten Wand (25) des Pressengehäuses (8) mittels des Schwenkbedienungshebels (17) in Richtung auf das erste Reibrad (15) begrenzt verschiebbar abgestützt ist.

8. Vorrichtung nach Anspruch 7, dadurch gekennzeichnet, dass eine Feder (39) die Lagerplatte (32) in der Einsetzöffnung (38) entgegen einer zum ersten Reibrad (15) hin gerichteten Verschiebebewegung beaufschlagt.

9. Vorrichtung nach Anspruch 7 oder 8, dadurch gekennzeichnet, dass der Schwenkbedienungshebel (17) an einer in den beiden Lagerplatten (32, 33) achsparallel zu den Antriebsrollen (12, 13) gelagerten Schwenkwelle (35) befestigt und kurz vor Erreichen seiner Betätigungsendstellung an ein an der Wand (25) des Pressengehäuses (8) auf der dem ersten Reibrad (15) abgewandten Seite der Einsetzöffnung (38) einstellbar befestigtes Schubwiderlager (57) anlegbar ist.

10. Vorrichtung nach einem oder mehreren der Ansprüche 1 bis 9, dadurch gekennzeichnet, dass der Träger für das Schneidorgan (20) von einer sich annähernd über die Breite der Hüllbahn (10) und parallel zu den Abzugsrollen (12, 13) erstreckenden Trägerleiste (21) gebildet ist, an der auf der Schwenkwelle (35) des Schwenkbedienungshebels (17) befestigte, abgekröpfte Hebelarme (41) angreifen, welche die Antriebswellen der Abzugsrollen (12, 13) übergreifen.

11. Vorrichtung nach Anspruch 10, dadurch gekennzeichnet, dass an den Enden der Trägerleiste (21) Zugfedern (22) angreifen, die die Trägerleiste in die Ruhelage für das Schneidorgan (20) zu ziehen bestrebt sind.

12. Vorrichtung nach Anspruch 11, dadurch gekennzeichnet, dass die Zugfedern (22) anderenends an Schwenkbügeln (36) angreifen, die auf der Schwenkwelle (35) des Schwenkbedienungshebels (17) frei gelagert sind und Wellenlager für die zweite Antriebsrolle (13) der Abzugsvorrichtung (11) abstützen.

13. Vorrichtung nach einem oder mehreren der Ansprüche 1 bis 12, dadurch gekennzeichnet, dass das Schneidorgan (20) aus einer Vielzahl von in zwei Reihen angeordneten, nebeneinander an der Trägerleiste (21) befestigten, etwa dreieckförmigen Messerklingen (42, 43) besteht, von denen die Messerklingen (42) die erste Reihe im Abstand flächenparallel und auf Lücke versetzt zu denen (43) der zweiten Reihe angeordnet sind.

14. Vorrichtung nach Anspruch 13, dadurch gekennzeichnet, dass die Ebenen der Messerklingen (42, 43) beim Schneidvorgang etwa stumpfwinklig zur Ebene der heranlaufenden Hüllbahn (10) ausgerichtet sind, die Messerklingen (42, 43) mit einer Dreieckspitze zur Hüllbahn hinweisen und zugeschärfte Schneidkanten (44) aufweisen.

15. Vorrichtung nach Anspruch 13 oder 14, dadurch gekennzeichnet, dass in Vorderansicht auf die Reihen der Messerklingen (42, 43) die Schneidkanten (44) der Klingen (42) der ersten Reihe sich mit den der Klingen (43) der zweiten Reihe in Punkten verschneiden, die etwa Schneidkantenhalbierungspunkte bilden.

**Claims**

1. A device which can be mounted on a baler (1) for wrapping a round bale of harvested agricultural crops contained in the shaping chamber (2) of the baler in a portion of a web of wrapping material (10), consisting of a supply reel (9) for an endless web of wrapping material (10), which reel can be supported for rotation above, in front of and parallel to an entrance (5) to the shaping chamber for the product, a withdrawal device (11) for the web of wrapping material, which device comprises two withdrawal rollers (12, 13) which are in continuous mutual pressure engagement and convey the web of wrapping material jointly between them towards the product entrance (5) when driven in a starting phase of the wrapping operation, a driving mechanism (14) for the withdrawal device, which mechanism can be switched on and off by means of a pivoted lever (17), and a cutting device (18) which can be actuated towards the end of the wrapping operation and which comprises a cutting member (20) which can be moved transversely to the direction in which the web of material runs off, out of an initial cutting position towards the web of wrapping material and beyond the plane of the web into an end cutting position and which is disposed in the region between the product entrance (5) and the withdrawal device (11) and is secured to a support (21) which is movable by means of a pivoted operating lever and is subject to the action of springs (22), characterised in that as a result of actuation of the pivoted operating lever (17) for the drive (14) of the withdrawal device (11), the cutting member (20) can be moved out of its end cutting position forming the position of rest, against the action of the springs (22) on the support (21) of the cutting member into a prestressed initial cutting position and can be locked in this by al locking device (50, 51), and that a measuring and releasing device (29) is provided which cancels the locking depending on a preset degree of wrapping being reached for the round bales (27) and releases the cutting member for its cutting movement.

2. A device according to Claim 1, characterised in that the pivoted operating lever (17) is a component of the locking device (50, 51) and of the measuring and releasing device (29).

3. A device according to Claim 1 or 2, characterised in that a controllable friction gear (14) with a pair of friction wheels (15, 16) is provided as a drive for the withdrawal device (11), of which the first wheel (15) is secured to one end (26) of a driving shaft (23) for conveyor members (6) of the shaping chamber (2) of the baler (1) and the second (16) is mounted on the end (12') at the same side of a shaft of a withdrawal roller (12) and can be pressed into frictional engagement against the first friction wheel (15) by means of the pivoted operating lever (17).

4. A device according to Claim 3, characterised in that a measuring member (29) which can be sensed and which projects at one side is associated coaxially with the first friction wheel (15) and the pivoted operating lever (17) is united with a sensing arm (50) which can be laid on the measuring member and supported on this by actuation of the pivoted operating lever for the drive of the withdrawal device (11), locks the cutting member (20) together with its support (21) in the initial cutting position while it is supported on the measuring member and releases the cutting member for its cutting movement by separating from the measuring member after sensing its measuring section.

5. A device according to Claim 4, characterised in that the measuring member is constructed in the form of a threaded bolt (29), the turns of the thread of which form the measuring section and which can be screwed more or less far into a coaxial blind tapped hole (30) in the end (26) of the driving shaft (23) carrying the first friction wheel (15) and can be located in its particular screwed-in position by means of a lock nut (31), and that the sensing arm (50) is constructed in the form of a spring lamination which is flexible only in the transverse direction and carries, at its end adjacent to the measuring member (29), a pivoted locking pawl (51) which, on an upward movement of the sensing arm (50), can be swung out of its locking position by the measuring member and, after passing the measuring member, drops back into its locking positon and has a lower sensing and supporting edge (55) which, when resting on the measuring member, engages in its thread with a sensing action.

6. A device according to one or more of Claims 3 to 5, characterised in that the shaft ends of the driving roller (12) of the withdrawal device (11), which roller is provided with the second friction wheel (16), are mounted in bearing plates (32, 33) at the ends and the bearing plates are connected to one another through connecting means (34) parallel to the axis to form a structural unit and that the structural unit can be inserted, in the manner of a slide-in unit, through an insertion opening (38) in a first wall (25) of the baler housing (8), in this, in front of the shaping chamber (2) and above its entrance (5) for the product.

7. A device according to Claim 6, characterised in that the bearing plate (33) of the structural unit remote from the friction gear (14) can be rigidly connected to an associated second wall (25') of the housing (8) of the baler (1) and the bearing plate (32) adjacent to the friction gear is supported in the insertion opening (38) of the first wall (25) of the baler housing (8) for limited displacement in the direction of the first friction wheel (15) by means of the pivoted operating lever (17).

8. A device according to Claim 7, characterised in that a spring (39) acts on the bearing plate (32) in the insertion opening (38) counter to a displacement movement directed towards the first friction wheel (15).

9. A device according to Claim 7 or 8, characterised in that the pivoted operating lever (17) is secured to a rocking shaft (35) mounted parallel to the axes of the driving rollers (12, 13) and, shortly before reaching its final actuating position, can be laid against a thrust abutment (57) which is adjustably secured to the wall (25) of the baler housing (8) at the side of the insertion opening (38) remote from the first friction wheel (15).

10. A device according to one or more of the Claims 1 to 9, characterised in that the support for the cutting member (20) is formed by a supporting bar (21) which extends substantially over the width of the web of wrapping material (10) and parallel to the withdrawal rollers (12, 13) and on which there act bent lever arms (41) which are secured to the rocking shaft (35) of the pivoted operating lever (17) and engage over the driving shafts of the withdrawal rollers (12, 13).

11. A device according to Claim 10, characterised in that tension springs (22), which tend to pull the supporting bar into the position of rest for the cutting member (20), act on the ends of the supporting bar (21).

12. A device according to Claim 11, characterised in that the tension springs (22) act, at the other end, on pivoted yokes (36) which are mounted freely on the rocking shaft (35) of the pivoted operating lever (17) and support shaft bearings for the second driving roller (13) of the withdrawal device (11).

13. A device according to one or more of the Claims 1 to 12, characterised in that the cutting member (20) consists of a plurality of substantially triangular knife blades (42, 43) which are arranged in two rows and secured side by side to the supporting bar (21) and of which the knife blades (42) of the first row are arranged with spacing with parallel surfaces and staggered in relation to those (43) of the second row.

14. A device according to Claim 13, characterised in that the planes of the knife blades (42, 43) are aligned, during the cutting operation, substantially at an obtuse angle to the plane of the approaching web of wrapping material (10), the knife blades (42, 43) point towards the web of wrapping material with a triangular tip and comprise sharpened cutting edges (44).

15. A device according to Claim 13 or 14, characterised in that in a front view of the rows of knife blades (42, 43), the cutting edges (44) of the blades (42) of the first row intersect those of the blades (43) of the second row at points which substantially form mid-points of the cutting edges.

## Revendications

1. Dispositif pouvant être monté sur une presse à balles (1) pour envelopper une balle ronde de produit agricole moissonné contenue dans la chambre de formage (2) de la presse à balles, au moyen d'une section d'une nappe d'enveloppement (10), constitué d'un rouleau d'alimentation (9) pour une nappe d'enveloppement sans fin (10), pouvant être disposé à rotation au-dessus et en avant d'un orifice d'entrée de produit moissonné (5) et parallèlement à celui-ci, d'un dispositif de tirage (11) pour la nappe d'enveloppement comprenant deux rouleaux de tirage (12, 13) qui sont constamment en contact sous pression l'un avec l'autre, et qui, lors d'un entraînement dans une phase de démarrage de l'opération d'enveloppement, font avancer la nappe d'enveloppement d'un bloc entre eux vers l'orifice d'entrée de produit moissonné (5), d'un dispositif d'entraînement (14) pour le dispositif de tirage pouvant être enclenché et déclenché au moyen d'un levier pivotant (17) et d'un dispositif sectionneur (18) pouvant être actionné à l'approche de la fin de l'opération d'enveloppement et comportant un organe sectionneur (20) disposé dans la zone comprise entre l'orifice d'entrée de produit moissonné (5) et le dispositif de tirage (11), pouvant être engagé contre la nappe d'envelopppement dans un sens perpendiculaire à la direction d'avancement de celle-ci à partir d'une position de départ de sectionnement et pouvant être amené au-delà du plan de la nappe dans une position de sectionnement, cet organe sectionneur étant fixé à un support (21) mobile à l'intervention d'un levier de commande pivotant et soumis à la sollicitation de ressorts (22), caractérisé en ce que, par actionnement du levier de commande pivotant (17) pour l'entraînement (14) du dispositif de tirage (11), l'organe sectionneur (20) peut être amené de sa position de sectionnement constituant la position de repos, à l'encontre de la sollicitation des ressorts (22) sur son support (21), dans une position de départ de sectionnement sous précontrainte et peut être bloqué dans cette position par un dispositif de verrouillage (50, 51), et un dispositif de mesure et de déclenchement (29) est prévu pour, en fonction de l'obtention d'un degré d'enveloppement prédéfini pour les balles rondes (27), supprimer le blocage et permettre à l'organe sectionneur d'effectuer son mouvement de sectionnement.

2. Dispositif suivant la revendication 1, caractérisé en ce que le levier de commande pivotant (17) fait partie du dispositif de verrouillage (50, 51) ainsi que du dispositif de mesure et de déclenchement (29).

3. Dispositif suivant la revendication 1 ou 2, caractérisé en ce qu'à titre d'entraînement pour le dispositif de tirage (11), un mécanisme à roues de friction commutable (14) comportant deux roues de friction (15, 16) est prévu, la première roue (15) étant fixée sur une extrémité (26) d'un arbre d'entraînement (23) pour les organes de transport (6) de la chambre de formage (2) de la presse à balles (1) et la seconde roue (16) étant montée sur l'extrémité (12') de l'arbre située du même côté d'un rouleau de tirage (12) et pouvant être pressée en contact de friction avec la première roue de friction (15) au moyen du levier de commande pivotant (17).

4. Dispositif suivant la revendication 3, caractérisé en ce qu'un organe de mesure palpable (29) en saillie d'un côté, est monté coaxialement sur la première roue de friction (15) et le levier de commande pivotant (17) est relié à un bras de palpage (50) qui, par actionnement du levier de commande pivotant pour l'entraînement du dispositif de tirage (11), peut être posé sur l'organe de mesure et peut prendre appui sur celui-ci et qui, pendant qu'il prend appui sur l'organe de mesure, bloque l'organe sectionneur (20) et son support (21) dans la position de départ de coupe puis, après avoir détecté la distance de mesure de l'organe de mesure, en se détachant de celui-ci, libère l'organe sectionneur pour son mouvement de sectionnement.

5. Dispositif suivant la revendication 4, caractérisé en ce que l'organe de mesure a la forme d'un goujon fileté (29) dont les filets de vis forment la distance de mesure et qui peut être vissé plus ou moins profondément dans une forure borgne coaxiale (30) dans l'extrémité (26) de l'arbre d'entraînement (23) portant la première roue de friction (15) et être bloqué dans sa position de vissage respective au moyen d'un contre-écrou (31), et le bras de palpage (50) a la forme simplement d'une lame de ressort flexible dans un sens transversal et porte, sur son extrémité tournée vers l'organe de mesure (29), un cliquet de blocage de pivotement (51) qui, lors d'un déplacement vers le haut du bras de palpage (50), peut être écarté par l'organe de mesure de sa position de blocage, revient dans sa position de blocage après avoir franchi l'organe de mesure et possède un bord de palpage et de support (55) qui, lorsqu'il est posé sur l'organe de mesure, s'engage à des fins de palpage dans le filet de vis de ce dernier.

6. Dispositif suivant l'une quelconque des revendications 3 à 5, caractérisé en ce que les extrémités de l'arbre du rouleau d'entraînement (12) du dispositif de tirage (11) pourvu de la deuxième roue de friction (16) tourillonne dans des flasques d'about (32, 33) et les flasques sont reliés l'un à l'autre pour former un module par des moyens de liaisons (34) parallèles à l'axe et le module peut être introduit en place à la manière d'un élément enfichable par une ouverture d'introduction (38) ménagée dans une première paroi (25) de l'enveloppe (8) de la presse, à l'intérieur de celle-ci, devant la chambre de formage (2) et au-dessus de son orifice d'entrée de produit (5).

7. Dispositif suivant la revendication 6, caractérisé en ce que le flasque de tourillonnement (33) du module opposé au mécanisme à roues de friction (14) peut être relié rigidement à une seconde paroi (25') de l'enveloppe (8) de la presse à balles (1) qui lui est associée et le flasque de tourillonnement (32) tourné vers le mécanisme à roues de friction peut être monté d'une manière permettant un coulissement limité en direction de la première roue de friction (15) dans l'ouverture d'introduction (38) de la première paroi (25) de l'envelopppe (8) de la presse à l'intervention du levier de commande pivotant (17).

8. Dispositif suivant la revendication 7, caractérisé en ce qu'un ressort (39) rappelle le flasque de tourillonnement (32) dans l'ouverture d'insertion (38) dans un sens opposé au coulissement en direction de la première roue de friction.

9. Dispositif suivant la revendication 7 ou 8, caractérisé en ce que le levier de commande pivotant (17) est fixé à un arbre-pivot (35) tourillonnant parallèlement à l'axe des rouleaux d'entraînement (12, 13) dans les deux flasques (32, 33) et, peu avant d'atteindre sa position d'actionnement, il peut être appliqué contre une butée (57) fixée de façon réglable à la paroi (25) de l'enveloppe (8) de la presse du côté de l'ouverture d'introduction (30) opposé à la première roue de friction (15).

10. Dispositif suivant l'une quelconque des revendications 1 à 9, caractérisé en ce que le support pour l'organe sectionneur (20) est formé par une latte de support (21) qui s'étend à peu près sur toute la largeur de la nappe d'enveloppement (10), parallèlement aux rouleaux de tirage (12, 13), et sur laquelle agissent des bras de levier coudés (41) fixés sur l'arbre-pivot (35) du levier de commande pivotant (17) et surplombant les arbres d'entraînement des rouleaux de tirage (12, 13).

11. Dispositif suivant la revendication 10, caractérisé en ce que des ressorts de traction (22) sollicitent les extrémités de la latte de support (21) et tendent à rappeler la latte de support dans la position de repos pour l'organe sectionneur (20).

12. Dispositif suivant la revendication 11, caractérisé en ce que les ressorts de traction (22) sont accrochés à leur autre extrémité à des étriers de pivotement (36) qui pivotent librement sur l'arbre-pivot (35) du levier de commande pivotant (17) et supportent des paliers d'arbre pour le second rouleau d'entraînement (13) du dispositif de tirage (11).

13. Dispositif suivant l'une quelconque des revendications 1 à 12, caractérisé en ce que l'organe sectionneur (20) est formé de plusieurs lames de couteaux à peu près triangulaires (42, 43) fixées en deux rangées disposées l'une à côté de l'autre sur la latte de support (21), les lames (42) de la première rangée étant espacées parallèlement et à plat des lames (43) de la seconde rangée et étant décalées en quincone par rapport à celles-ci.

14. Dispositif suivant la revendication 13, caractérisé en ce que les plans des lames de couteaux (42, 43), lors de l'opération de sectionnement, sont orientés de manière à former en substance un angle aigu avec le plan de la nappe d'enveloppement (10) arrivante, les lames de couteaux (42, 43) étant dirigées par un sommet de triangle vers la nappe d'enveloppement et présentant des tranchants biseautés (44).

15. Dispositif suivant la revendication 13 ou 14, caractérisé en ce que, dans une vue frontale des rangées de lames de couteaux (42, 43), les tranchants (44) des lames de couteaux (42) de la première rangée et ceux des lames (43) de la seconde rangée se coupent en des points qui forment environ des points bissecteurs de tranchants.

Fig.1

Fig. 2

0 129 021

_Fig. 3_

0 129 021

Fig.4

Fig.5

Fig.6